(19) Europäisches Patentamt
European Patent Office
Office européen des brevets

(11) **EP 3 620 812 A1**

(12) **EUROPEAN PATENT APPLICATION**

(43) Date of publication:
**11.03.2020 Bulletin 2020/11**

(51) Int Cl.:
***G01S 7/48*** (2006.01)   ***G06K 9/00*** (2006.01)
***G01S 17/93*** (2020.01)

(21) Application number: **19185606.1**

(22) Date of filing: **10.07.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.09.2018  CN 201811045711**

(71) Applicant: **Baidu Online Network Technology (Beijing) Co., Ltd.**
**Beijing 100085 (CN)**

(72) Inventor: **SHI,, Tingmin**
**BEIJING (CN)**

(74) Representative: **Brevalex**
**95, rue d'Amsterdam**
**75378 Paris Cedex 8 (FR)**

(54) **METHOD AND DEVICE FOR FILTERING OUT NON-GROUND POINTS FROM POINT CLOUD, AND STORAGE MEDIUM**

(57)    Embodiments of a method and device for filtering out non-ground points from a point cloud, and a storage medium are provided. The method includes: acquiring a point cloud by scanning ground with light detection and ranging (LiDAR); calculating radial distances of adjacent points in the point cloud; determining key points based on a variation of the radial distances of adjacent points; and filtering out non-ground points from the point cloud based on the key points. In the embodiments of the present application, the key points are determined based on the radial distances of adjacent points in the point cloud, and then the non-ground points are filtered out.

EP 3 620 812 A1

| acquiring a point cloud by scanning ground with LiDAR | S110 |

| calculating radial distances of adjacent points in the point cloud | S120 |

| determining key points based on a variation of the radial distances of adjacent points | S130 |

| filtering out non-ground points from the point cloud based on the key points | S140 |

**FIG. 1**

## Description

FIELD OF THE DISCLOSURE

The present disclosure relates to the field of information technology, and in particular to a method and device for filtering out non-ground points from a point cloud, and a computer readable storage medium.

BACKGROUND OF THE DISCLOSURE

A point data set of the outer surface of a to-be-detected object obtained by a measuring instrument (such as Light Detection and Ranging, LiDAR) is also referred to as a point cloud. When a laser beam is irradiated onto the surface of the object, the laser reflected from the object may carry information on orientation, distance and the like. If the laser beam scans in accordance with a certain trajectory, information on the reflected laser points is recorded while scanning. Since the scanning is extremely fine, a large quantity of laser points can be obtained, thereby forming a laser point cloud.

Ground points need to be removed from the point cloud before an obstacle is detected using the point cloud. Typically, a ground plane fitting is performed, and then a distance between each point and a fitted plane is calculated using the fitted plane so as to filter out the ground points. It may not be accurately determined which points are the ground points during the ground plane fitting. In this case, wrong points may be selected for the fitting, and the result of the ground plane fitting is inaccurate. Particularly, if a posture of a vehicle body or the ground varies greatly, a wrong fitted plane may be obtained, thereby causing errors in the filtering.

SUMMARY OF THE DISCLOSURE

According to embodiments of the present disclosure, a method and device for filtering out non-ground points from a point cloud and a computer readable storage medium are provided, to at least solve one or more technical problems in existing technologies.

In a first aspect, according to an embodiment of the present disclosure, a method for filtering out non-ground points from a point cloud is provided, the method includes: acquiring a point cloud by scanning ground with light detection and ranging (LiDAR); calculating radial distances of adjacent points in the point cloud; determining key points based on a variation of the radial distances of adjacent points; and filtering out non-ground points from the point cloud based on the key points.

In combination with the first aspect, in a first implementation of the first aspect of the embodiment of the present disclosure, the adjacent points include points obtained by scanning the ground using adjacent laser heads of the LiDAR or points obtained by scanning the ground using one laser head of the LiDAR at adjacent scanning angles. The radial distance is a distance from a projection position of a point of the point cloud to a coordinate origin in the top view plane. The coordinate origin in the top view plane is a projection of a laser origin in the top view plane.

In combination with the first aspect, in a second implementation of the first aspect of the embodiment of the present disclosure, the determining key points based on a variation of the radial distances of adjacent points includes: setting a threshold for the variation of the radial distances; and determining at least one of the adjacent points as a key point, in a case that the variation of the radial distances of adjacent points is greater than the threshold.

In combination with the second implementation of the first aspect, in a third implementation of the first aspect of the embodiment of the present disclosure, the setting a threshold for the variation includes: setting the threshold based on an angular resolution of the LiDAR.

In combination with the third implementation of the first aspect, in a fourth implementation of the first aspect of the embodiment of the present disclosure, the setting the threshold based on an angular resolution of the LiDAR includes: setting the threshold to be greater than or equal to a product of the angular resolution of the LiDAR and a scanning distance. The scanning distance is a distance from the laser origin to a detection position.

In combination with the first aspect, the first implementation of the first aspect, the second implementation of the first aspect, the third implementation of the first aspect or the fourth implementation of the first aspect, in a fifth implementation of the first aspect of the embodiment of the present disclosure, the filtering out non-ground points from the point cloud based on the key points includes: obtaining regions in the top view plane by dividing the top view plane in a radial direction based on the key points; acquiring height information of the respective regions based on the point cloud; and determining whether points within the respective regions are non-ground points based on the height information.

In combination with the first implementation of the first aspect, the second implementation of the first aspect, the third implementation of the first aspect or the fourth implementation of the first aspect, in a sixth implementation of the first aspect of the embodiment of the present disclosure, the filtering out non-ground points from the point cloud based on the key points includes: acquiring, in the top view plane, a plurality of key points on a straight line connecting the coordinate origin with a key point; obtaining height information of a region between two adjacent key points on the straight line, based on the point cloud; and determining whether a point in the region is a non-ground point based on the height information.

In a second aspect, according to an embodiment of the present disclosure, a device for filtering out non-ground points from a point cloud is provided, the device includes: a point cloud acquisition unit configured to acquire a point cloud by scanning the ground with light detection and ranging (LiDAR); a radial distance calculation unit configured to calculate radial distances of adjacent points in the point cloud; a key point determination unit configured to determine key points based on a variation of the radial distances of adjacent points; and a ground detection unit configured to filter out non-ground points from the point cloud based on the key points.

In combination with the second aspect, in a first implementation of the second aspect of the embodiment of the present disclosure, the adjacent points include points obtained by scanning the ground using adjacent laser heads of the LiDAR or points obtained by scanning the ground using one laser head of the LiDAR at adjacent scanning angles. The radial distance is a distance from a projection position of a point of the point cloud to a coordinate origin in the top view plane. The coordinate origin in the top view plane is a projection of a laser origin in the top view plane.

In combination with the second aspect, in a second implementation of the second aspect of the embodiment of the present disclosure, the key point determination unit includes: a setting subunit configured to set a threshold for the variation of the radial distances; and a determination subunit configured to determine at least one of the adjacent points as a key point, in a case that the variation of the radial distances of the adjacent points is greater than the threshold.

In combination with the second implementation of the second aspect, in a third implementation of the second aspect of the embodiment of the present disclosure, the setting subunit is further configured to set the threshold based on an angular resolution of the LiDAR.

In combination with the third implementation of the second aspect, in a fourth implementation of the second aspect of the embodiment of the present disclosure, the setting subunit is further configured to set the threshold to be greater than or equal to a product of the angular resolution of the LiDAR and a scanning distance. The scanning distance is a distance from the laser origin to a detection position.

In combination with the second aspect, the first implementation of the second aspect, the second implementation of the second aspect, the third implementation of the second aspect or the fourth implementation of the second aspect, in a fifth implementation of the second aspect of the embodiment of the present disclosure, the ground detection unit is further configured to: obtain regions in the top view plane by dividing the top view plane in a radial direction based on the key points; acquire height information of the respective regions based on the point cloud; and determine whether points within the respective regions are non-ground points based on the height information.

In combination with the first implementation of the second aspect, the second implementation of the second aspect, the third implementation of the second aspect or the fourth implementation of the second aspect, in a sixth implementation of the second aspect of the embodiment of the present disclosure, the ground detection unit is further configured to: acquire, in the top view plane, a plurality of key points on a straight line connecting the coordinate origin with a key point; obtain height information of a region between two adjacent key points on the straight line, based on the point cloud; and determine whether a point in the region is a non-ground point based on the height information.

In a possible design, a device for filtering out non-ground points from a point cloud includes a processor and a memory for storing a program which supports the device for filtering out non-ground points from a point cloud in executing the method for filtering out non-ground points from a point cloud described above in the first aspect, and the processor is configured to execute the program stored in the memory. The device for filtering out non-ground points from a point cloud can further include a communication interface for enabling the device for filtering out non-ground points from a point cloud to communicate with other devices or communication networks.

In a third aspect, a device for filtering out non-ground points from a point cloud is provided according to an embodiment of the present disclosure. The device includes: one or more processors; and a storage device configured to store one or more programs; wherein the one or more programs, when executed by the one or more processors, cause the one or more processors to implement any one of the above methods according to the first aspect.

In a fourth aspect, a computer readable storage medium is provided according to an embodiment of the present disclosure. The computer readable storage medium is configured to store a computer program which, when executed by a processor, causes the processor to implement any one of the above methods according to the first aspect.

The above technical solutions have the following advantages or advantageous effects. The key points are determined based on the radial distances of adjacent points in the point cloud, and then the non-ground points are filtered out. The calculation method is simple, the amount of calculation is small, and the execution speed is fast. Furthermore, the defect of inaccurate ground fitting in existing technologies is overcome. The determination result is more reliable. A small height variation can be detected sharply, thereby improving the accuracy of obstacle detection.

The above summary is provided only for illustration, and is not intended to limit the present disclosure in any way. In addition to the illustrative aspects, embodiments and features described above, further aspects, embodiments and features of the present disclosure may be readily understood from the following detailed description with reference to the accompanying drawings.

BRIEF DESCRIPTION OF THE DRAWINGS

Unless otherwise specified, identical or similar parts or elements are denoted by identical reference signs throughout several figures of the accompanying drawings. The drawings are not necessarily drawn to scale. It should be understood that these drawings merely illustrate some embodiments of the present disclosure, and should not be construed as limiting the scope of the disclosure.

FIG. 1 is a flowchart of a method for filtering out non-ground points from a point cloud according to an embodiment of the present disclosure;

FIG. 2 is a schematic diagram showing spatial coordinates of a laser origin and a radial distance in a method for filtering out non-ground points from a point cloud according to another embodiment of the present disclosure;

FIG. 3a is a schematic diagram showing a variation of radial distances of adjacent upper and lower laser heads in a method for filtering out non-ground points from a point cloud according to another embodiment of the present disclosure;

FIG. 3b is a schematic diagram showing a variation of radial distances of one laser head at adjacent left and right scanning angles in a method for filtering out non-ground points from a point cloud according to another embodiment of the present disclosure;

FIG. 4 is a schematic diagram of obstacle detection in a method for filtering out non-ground points from a point cloud according to another embodiment of the present disclosure;

FIG. 5 is a detection flowchart of a method for filtering out non-ground points from a point cloud according to another embodiment of the present disclosure;

FIG. 6 is a detection flowchart of a method for filtering out non-ground points from a point cloud according to another embodiment of the present disclosure;

FIG. 7 is a block diagram showing the structure of a device for filtering out non-ground points from a point cloud according to an embodiment of the present disclosure;

FIG. 8 is a block diagram showing the structure of a device for filtering out non-ground points from a point cloud according to another embodiment of the present disclosure; and

FIG. 9 is a block diagram showing the structure of a device for filtering out non-ground points from a point cloud according to another embodiment of the present disclosure.

## DETAILED DESCRIPTION OF THE EMBODIMENT(S) OF THE DISCLOSURE

Hereinafter, only some exemplary embodiments are simply described. As can be appreciated by those skilled in the art, the described embodiments may be modified in various different ways without departing from the spirit or scope of the present disclosure. Accordingly, the drawings and the description should be considered as illustrative in nature instead of being restrictive.

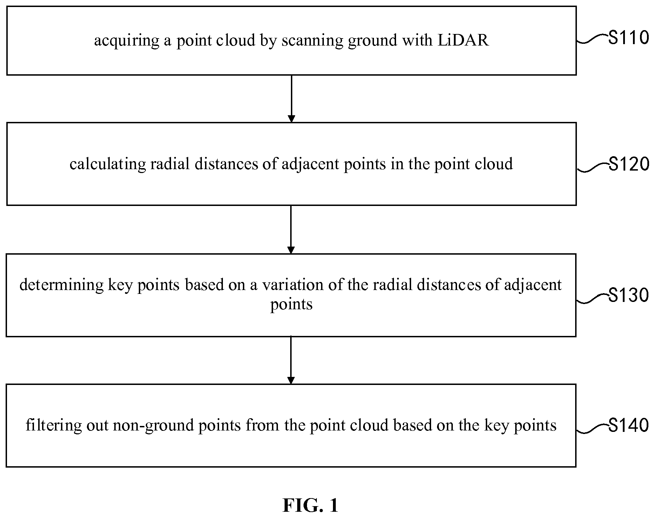

FIG. 1 is a flowchart of a method for filtering out non-ground points from a point cloud according to an embodiment of the present disclosure. As shown in FIG. 1, the method for filtering out the non-ground points from a point cloud according to the embodiment of the present disclosure includes: step S110, acquiring a point cloud by scanning the ground with LiDAR; step S120, calculating radial distances of adjacent points in the point cloud; Step S130, determining key points based on a variation of the radial distances of adjacent points; and step S140, filtering out non-ground points from the point cloud based on the key points.

Data measured by Light Detection and Ranging (LiDAR) include a discrete point representation of a Digital Surface Model (DSM). The data contain spatial three-dimensional information, laser intensity information, and so on. A laser beam is emitted from a sensor, travels to the ground or an object surface via air, and then is reflected by the ground or the surface of the object. The reflected energy is received by a sensor and recorded as an electrical signal. If an emission time instant and an reception time instant are accurately recorded, a distance (R) from the laser to the ground or the surface of the object can be calculated using the following formula: R=ct/2, where c represents the speed of light, and t represents a time difference between the emission time instant and the reception time instant. A light pulse travels at the speed of light. A beam of discrete light pulses is emitted from a laser emitter, arrives at the earth's surface and is reflected. A receiver always receives a light pulse reflected back before a next light pulse is emitted. The distance is obtained by recording a time period during which the instantaneous laser travels to the target.

In the embodiment of the present disclosure, by using ordered information on the LiDAR points, some key points are found by determining a variation of the radial distances of adjacent points, and all the non-ground points are filtered out based on these key points.

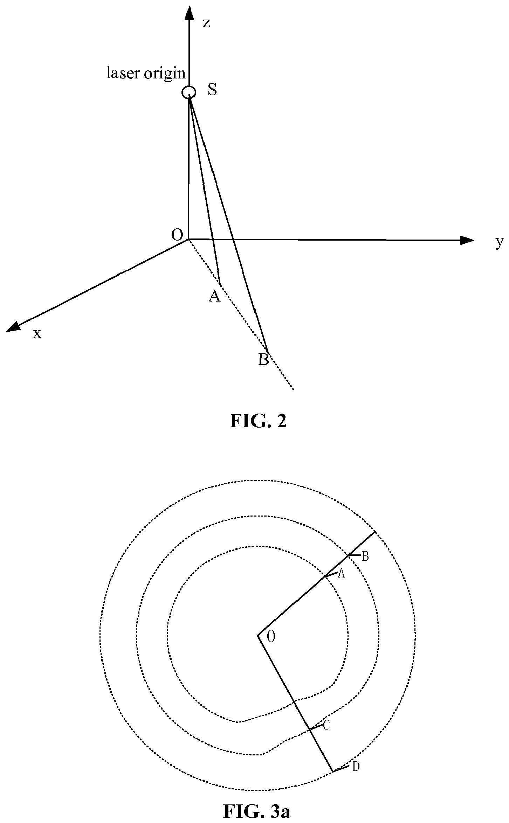

FIG. 2 is a schematic diagram showing spatial coordinates of a laser origin and a radial distance in a method for filtering out non-ground points from a point cloud according to another embodiment of the present disclosure. FIG. 3a is a schematic diagram showing a variation of radial distances of adjacent upper and lower laser heads in a method for filtering out non-ground points from a point cloud according to another embodiment of the present disclosure. Reference is made to FIG. 2 and FIG. 3a. The adjacent points include points obtained by scanning the ground using adjacent laser heads of the LiDAR or points obtained by scanning the ground using one laser head of the LiDAR at adjacent scanning angles. The radial distance is a distance from a projection position of a point of the point cloud to a coordinate origin in the top view plane. The coordinate origin of the top view plane (such as plane xy in FIG. 2) is a projection of a laser origin S in the top view plane.

Reference is made to FIG. 2 and FIG. 3a. Multiple laser heads may be generally configured for a LiDAR device, such as 64 laser heads. The laser head may have a horizontal scanning direction. For any laser head, by taking the horizontal scanning as an example, if the ground is flat, a point cloud generated may be a complete circle (see the largest circle in FIG. 3a).

In FIG. 2, multiple laser heads emit laser signals. In this case, a location model for the laser heads may be equivalent to that all the laser heads are located at the laser origin S in FIG. 2, with emission angles of the laser heads each being different. Referring to FIG. 3a, if the ground is flat, a gradient of variation of the radial distances is very uniform. However, if there is an obstacle (such as a person, a vehicle, a tree, and the like), the distance may suddenly be enlarged at the edge of the obstacle. For example, in FIG. 3a, the gradient of variation of the radial distances at points A and B is very uniform; circle curves are distorted respectively at point C and point D; the gradient of variation of the radial distances at points C and D is non-uniform, and the distance between point C and point D is enlarged.

The radial distances of adjacent points in the point cloud can be represented as distances from projections of the adjacent points in the top view plane (plane xy) to the coordinate origin of the top view plane. Referring to FIG. 2, a distance from point A or point B to the coordinate origin O in plane xy is a radial distance. That is, OA and OB in FIG. 2 are radial distances. Assuming that the length of OA is L1 and the length of OB is L2, then a variation of the radial distances is P=L2-L1.

Using the ordered information on LiDAR points, the radial distances OA and OB of the adjacent points can be calculated. Further, a variation P of the radial distances of the adjacent points, that is, the length of a line segment AB, can be calculated. Key points can be determined based on the variation of the radial distances.

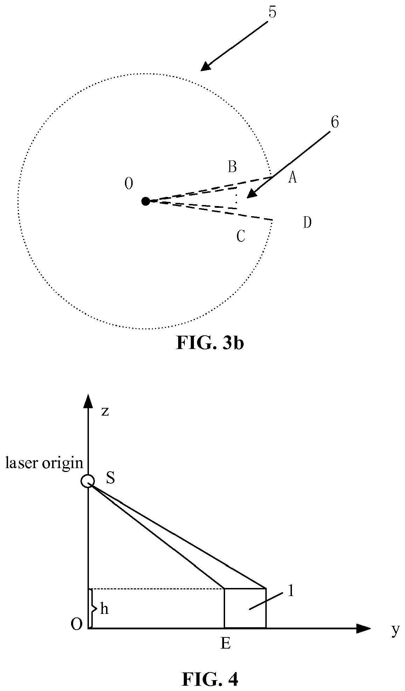

FIG. 3b is a schematic diagram showing a variation of radial distances by one laser head at adjacent left and right scanning angles in a method for filtering out non-ground points from a point cloud according to another embodiment of the present disclosure. Reference numeral 5 in FIG. 3b represents the i-th scanning line of the LiDAR. Reference numeral 6 in FIG. 3b represents an obstacle such as a person or a vehicle. In FIG. 3b, it is shown a projection of a certain scanning line of the LiDAR on the ground, i.e., scanning points of one laser head at different angles indicated by reference numeral 5 in FIG. 3b. A position BC shown by reference numeral 6 is the position of obstacle (such as a person or a vehicle). Affected by the obstacle, a radial distance of point B is less than a radial distance of point A adjacent to point B, and a radial distance of point C is less than a radial distance of point D adjacent to point C, i.e., OA>OB and OD>OC. In addition, the obstacle is higher than the ground, hence the average height of the segment BC is greater than the heights of point A and point D. Further, a variation of the radial distances of adjacent points, that is, the length of line segment AB and the length of line segment CD, can be calculated. The key points can be determined based on the variation of the radial distances.

In a possible implementation, the determining key points based on a variation of the radial distances of adjacent points includes: setting a threshold for the variation of the radial distances; and determining at least one of the adjacent points as a key point, if the variation of the radial distances of the adjacent points is greater than the threshold.

The key point may represent a boundary point of different regions where two adjacent objects are respectively located. It can be seen from the point cloud information that the key point is a point at which the radial distance varies abnormally and non-uniformly. In an implementation, if the variation of the radial distances of the adjacent points is greater than the threshold, one of the adjacent points which has a smaller radial distance is determined as the key point.

In a possible implementation, the setting a threshold for the variation includes: setting the threshold based on an angular resolution of the LiDAR. Further, the key points are determined based on the threshold.

In a possible implementation, the setting the threshold based on an angular resolution of the LiDAR includes: setting the threshold to be greater than or equal to a product of the angular resolution of the LiDAR and a scanning distance. The scanning distance is a distance from the laser origin to a detection position.

The angular resolution is represented as $\Delta\theta$. Referring to FIG. 2, $\Delta\theta$ is an included angle between SA and SB. The threshold may be set as follows.

In a sector having a central angle of $\Delta\theta$ and a radius of R, the arc length of an arc corresponding to the central angle is:

$$L = \Delta\theta * R.$$

In theory, the variation of the radial distances of adjacent points is less than the arc length L. Thus, in a possible embodiment, the threshold can be set as $\Delta\theta * R$. If the variation of the radial distances of adjacent points is greater than the threshold, it is determined that the position is a region in which a key point is located.

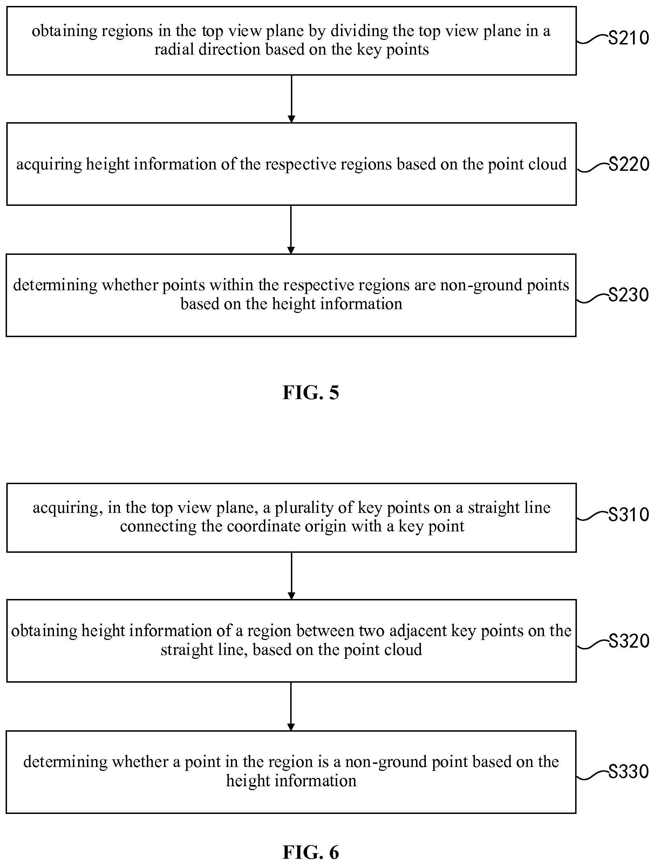

FIG. 5 is a detection flowchart of a method for filtering out non-ground points from a point cloud according to another embodiment of the present disclosure. As shown in FIG. 5, in a possible implementation, the step S140 in FIG. 1 of filtering out non-ground points from the point cloud based on the key points may specifically include: step S210, obtaining regions in the top view plane by dividing the top view plane in a radial direction based on the key points; step S220, acquiring height information of the respective regions based on the point cloud; and step S230, determining whether points within the respective regions are non-ground points based on the height information.

Regions located at two sides of the key point are respectively related to two objects. The region located at a certain side may be related to the ground, or neither of the regions located at the two sides is related to the ground. Generally, continuous point cloud information may be generated when a laser head scans on the ground and scans on the surface of the obstacle. If the gradient of variation of the radial distance of a point is large, two sides of this point should be related to two objects, and the point is determined as a key point. Based on this determination, if other features are considered, for example, adding some thresholds for height for the determination, it is easy to know which side of the key point is related to the ground.

The determining whether points within the respective regions are non-ground points based on the height information may include the following two embodiments.

In a first embodiment, a height difference between the regions at the two sides of the key point can be determined based on the point cloud. In a case where the height difference is large, for example, in a case where the height difference is larger than a preset height difference threshold, the higher one of the regions at the two sides of the key point is determined as a region in which the obstacle is located, that is, non-ground points. FIG. 4 is a schematic diagram of obstacle detection in a method for filtering out non-ground points from a point cloud according to another embodiment of the present disclosure. As shown in FIG. 4, a rectangle assigned with the number 1 indicates an obstacle, point E is a key point in the top view plane, and regions located at two sides of point E are respectively related to two objects. A height difference h between the regions at the two sides of the key point can be determined based on the point cloud. In addition, a height difference threshold can be set based on the size of the obstacle. For example, the height of a car is generally between 1400mm and 1600mm, and the height of an adult is generally between 1500mm and 1900mm. If the height difference between the regions at the two sides of point E is greater than the preset height difference threshold, the region at the right side of point E, that is, the region at the higher side is determined as the region in which the obstacle is located.

In a second embodiment, the heights of regions at two sides of a key point may be compared based on the point cloud, and the higher one of the regions at the two sides of the key point is determined as a region in which an obstacle is located, that is, non-ground points. Further, for the lower region of the regions at the two sides of the key point, searching may be performed in the scanning region to find whether there is a region having a height value less than that of the lower region. If there is a region having a height value less than that of the lower region, the lower region is determined as the region in which the obstacle is located, that is, non-ground points.

FIG. 6 is a detection flowchart of a method for filtering out non-ground points from a point cloud according to another embodiment of the present disclosure. As shown in FIG. 6, in a possible implementation, the step S140 in FIG. 1 of filtering out non-ground points from the point cloud based on the key points may include: step S310, acquiring, in the top view plane, a plurality of key points on a straight line connecting the coordinate origin with a key point; step S320, obtaining height information of a region between two adjacent key points on the straight line based on the point cloud; and step S330, determining whether a point in the region is a non-ground point based on the height information.

For example, in point cloud information on a straight line, two segmentation points can be sequentially obtained in a direction away from the coordinate origin. These two segmentation points are at two edges of the obstacle. It can be further determined that a region between the segmentation points is related to the obstacle.

Furthermore, it can be determined based on the height information whether points in the respective regions are non-ground points, according to the above two embodiments, and a detailed description is omitted herein.

The above technical solutions have the following advantages or advantageous effects. The key points are determined based on the radial distances of adjacent points in the point cloud, and then the non-ground points are filtered out. The calculation method is simple, the amount of calculation is small, and the execution speed is fast. Furthermore, the defect of inaccurate ground plane fitting in conventional technologies is overcome. The determination result is more reliable. A small height variation can be detected sharply, thereby improving the accuracy of obstacle detection.

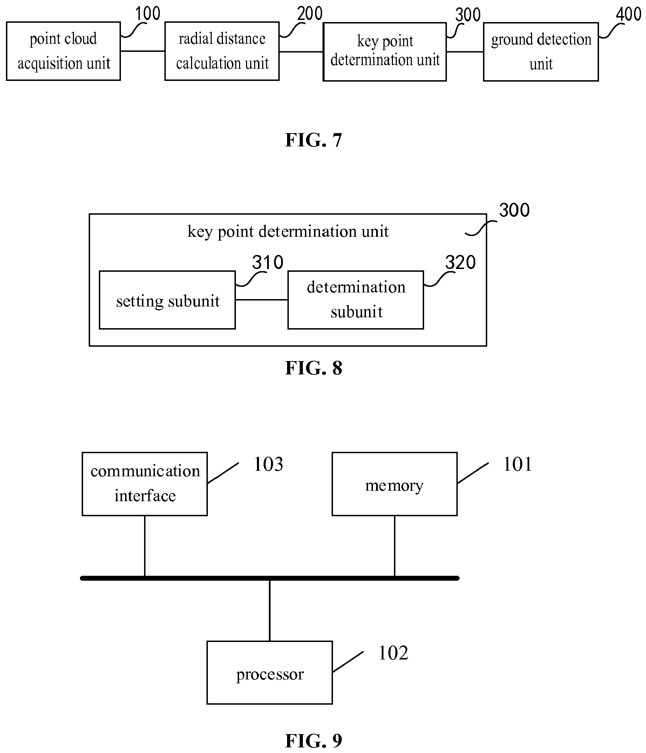

FIG. 7 is a block diagram showing the structure of a device for filtering out non-ground points from a point cloud according to an embodiment of the present disclosure. As shown in FIG. 7, the device for filtering out non-ground points from a point cloud according to the embodiment of the present disclosure includes: a point cloud acquisition unit 100 configured to acquire a point cloud by scanning the ground with LiDAR; a radial distance calculation unit 200 configured to calculate radial distances of adjacent points in the point cloud; a key point determination unit 300 configured to determine key points based on a variation of the radial distances of adjacent points; and a ground detection unit 400 configured to filter out non-ground points from the point cloud based on the key points.

In a possible implementation, the adjacent points include points obtained by scanning the ground using adjacent laser heads of the LiDAR or points obtained by scanning the ground using one laser head of the LiDAR at adjacent scanning angles. The radial distance is a distance from a projection position of a point of the point cloud to a coordinate origin in the top view plane. The coordinate origin in the top view plane is a projection of a laser origin in the top view plane.

FIG. 8 is a block diagram showing the structure of a device for filtering out non-ground points from a point cloud according to another embodiment of the present disclosure. As shown in FIG. 8, in a possible implementation, the key point determination unit 300 includes: a setting subunit 310 configured to set a threshold for the variation of the radial distances; and a determination subunit 320 configured to determine at least one of the adjacent points as a key point, if the variation of the radial distances of the adjacent points is greater than the threshold.

In a possible implementation, the setting subunit 310 is further configured to set the threshold based on an angular resolution of the LiDAR.

In a possible implementation, the setting subunit 310 is further configured to set the threshold to be greater than or equal to a product of the angular resolution of the LiDAR and a scanning distance. The scanning distance is a distance from the laser origin to a detection position.

In a possible implementation, the ground detection unit 400 is further configured to: obtain regions in the top view plane by dividing the top view plane in a radial direction based on the key points; acquire height information of the respective regions based on the point cloud; and determine whether points within the respective regions are non-ground points based on the height information.

In a possible implementation, the ground detection unit 400 is further configured to: acquire, in the top view plane, a plurality of key points on a straight line connecting the coordinate origin with a key point; obtain height information of a region between two adjacent key points on the straight line, based on the point cloud; and determine whether a point in the region is a non-ground point based on the height information.

For the functions of various units in the device for filtering out non-ground points from a point cloud according to the embodiment of the present disclosure, please refer to the corresponding description of the above described method, and a repeated description is not given herein.

In a possible design, a device for filtering out non-ground points from a point cloud includes a processor and a memory for storing a program which supports the device for filtering out non-ground points from a point cloud in executing the method for filtering out non-ground points from a point cloud described above, and the processor is configured to execute the program stored in the memory. The device for filtering out non-ground points from a point cloud can further include a communication interface for enabling the device for filtering out non-ground points from a point cloud to communicate with other devices or communication networks.

FIG. 9 is a block diagram showing the structure of a device for filtering out non-ground points from a point cloud according to another embodiment of the present disclosure. As shown in FIG. 9, the device includes a memory 101 and a processor 102, wherein a computer program that can run on the processor 102 is stored in the memory 101; when the processor 102 executes the computer program, the method for filtering out non-ground points from a point cloud according to the above embodiment is implemented; the number of the memory 101 and the processor 102 may each be one or more.

The device further includes:

a communication interface 103, configured to communicate with an external device to realize data interaction and transmission.

The memory 101 may include a high-speed RAM memory, or may also include a non-volatile memory, such as at least one disk memory.

If the memory 101, the processor 102 and the communication interface 103 are implemented independently, the memory 101, the processor 102 and the communication interface 103 may be connected to each other via a bus so as to realize mutual communication. The bus may be an industry standard architecture (ISA) bus, a peripheral component interconnect (PCI) bus, an extended industry standard architecture (EISA) bus, or the like. The bus may be categorized into an address bus, a data bus, a control bus or the like. For ease of illustration, only one bold line is shown in FIG. 9 to represent the bus, but it does not mean that there is only one bus or only one type of bus.

Optionally, in a specific implementation, if the memory 101, the processor 102 and the communication interface 103 are integrated on one chip, then the memory 101, the processor 102 and the communication interface 103 can complete mutual communication through an internal interface.

In another aspect, an embodiment of the present disclosure provides a computer readable storage medium having a computer program stored thereon which, when executed by a processor, implements any of the above described methods for filtering out non-ground points from a point cloud.

In the present specification, the description referring to the terms "one embodiment", "some embodiments", "an example", "a specific example", or "some examples" or the like means that the specific features, structures, materials, or characteristics described in connection with the embodiment or example are contained in at least one embodiment or example of the present disclosure. Moreover, the specific features, structures, materials, or characteristics described may be combined in a suitable manner in any one or more of the embodiments or examples. In addition, various embodiments or examples described in the specification as well as features of different embodiments or examples may be united and combined by those skilled in the art, as long as they do not contradict with each other.

Furthermore, terms "first" and "second" are used for descriptive purposes only, and are not to be construed as indicating or implying relative importance or implicitly indicating the number of recited technical features. Thus, a feature defined with "first" and "second" may include at least one said feature, either explicitly or implicitly. In the description of the present disclosure, the meaning of "a plurality" is two or more than two, unless otherwise explicitly or specifically indicated.

Any process or method described in the flowcharts or described otherwise herein may be construed as representing a module, segment or portion including codes for executing one or more executable instructions for implementing particular logical functions or process steps. The scope of the preferred embodiments of the present disclosure includes additional implementations in which functions may be implemented in an order that is not shown or discussed, including in a substantially concurrent manner or in a reverse order based on the functions involved. All these should be understood by those skilled in the art to which the embodiments of the present disclosure belong.

The logics and/or steps represented in the flowcharts or otherwise described herein for example may be considered as an ordered list of executable instructions for implementing logical functions. They can be specifically embodied in any computer readable medium for use by an instruction execution system, apparatus or device (e.g., a computer-based system, a system including a processor, or another system that can obtain instructions from the instruction execution system, apparatus or device and execute these instructions) or for use in conjunction with the instruction execution system, apparatus or device. For the purposes of the present specification, "computer readable medium" can be any means that can contain, store, communicate, propagate or transmit programs for use by an instruction execution system, apparatus or device or for use in conjunction with the instruction execution system, apparatus or device. More specific examples (non-exhaustive list) of computer readable storage medium at least include: electrical connection parts (electronic devices) having one or more wires, portable computer disk cartridges (magnetic devices), random access memory (RAM), read only memory (ROM), erasable programmable read-only memory (EPROM or flash memory), fiber optic devices, and portable read only memory (CDROM). In addition, the computer-readable storage medium may even be a paper or other suitable medium on which the programs can be printed. This is because for example the paper or other medium can be optically scanned, followed by editing, interpretation or, if necessary, other suitable ways of processing so as to obtain the programs electronically, which are then stored in a computer memory.

It should be understood that individual portions of the present disclosure may be implemented in the form of hardware, software, firmware, or a combination thereof. In the above embodiments, a plurality of steps or methods may be implemented using software or firmware stored in a memory and executed by a suitable instruction execution system. For example, if they are implemented in hardware, as in another embodiment, any one or a combination of the following techniques known in the art may be used: discrete logic circuits having logic gate circuits for implementing logic functions on data signals, application-specific integrated circuits having suitable combined logic gate circuits, programmable gate arrays (PGA), field programmable gate arrays (FPGA), etc.

Those skilled in the art may understand that all or part of the steps carried in the method of the foregoing embodiments may be implemented by using a program to instruct the relevant hardware, and the program may be stored in a computer readable storage medium. When executed, the program includes one or a combination of the steps in the method embodiments.

In addition, individual functional units in various embodiments of the present disclosure may be integrated in one processing module, or individual units may also exist physically and independently, or two or more units may also be integrated in one module. The above integrated module can be implemented in the form of hardware or in the form of a software functional module. The integrated module may also be stored in a computer readable storage medium if it is implemented in the form of a software function module and sold or used as a stand-alone product. The storage medium may be a read-only memory, a magnetic disk or an optical disk, etc.

The above description only relates to specific embodiments of the present disclosure, but the scope of protection of the present disclosure is not limited thereto, and any of those skilled in the art can readily contemplate various changes or replacements within the technical scope of the present disclosure. All these changes or replacements should be covered by the scope of protection of the present disclosure. Therefore, the scope of protection of the present disclosure should be determined by the scope of the appended claims.

**Claims**

1. A method for filtering out non-ground points from a point cloud, comprising:

   acquiring a point cloud by scanning ground with light detection and ranging, LiDAR;
   calculating radial distances of adjacent points in the point cloud;
   determining key points based on a variation of the radial distances of adjacent points; and

filtering out non-ground points from the point cloud based on the key points.

2. The method of claim 1, wherein the adjacent points comprise points obtained by scanning the ground using adjacent laser heads of the LiDAR or points obtained by scanning the ground using one laser head of the LiDAR at adjacent scanning angles; the radial distance is a distance from a projection position of a point of the point cloud to a coordinate origin in the top view plane, and the coordinate origin in the top view plane is a projection of a laser origin in the top view plane.

3. The method of claim 1 or 2, wherein the determining key points based on a variation of the radial distances of adjacent points comprises:

setting a threshold for the variation of the radial distances; and
determining at least one of the adjacent points as a key point, in a case that the variation of the radial distances of adjacent points is greater than the threshold.

4. The method of claim 3, wherein the setting a threshold for the variation comprises: setting the threshold based on an angular resolution of the LiDAR.

5. The method of claim 4, wherein the setting the threshold based on an angular resolution of the LiDAR comprises: setting the threshold to be greater than or equal to a product of the angular resolution of the LiDAR and a scanning distance, the scanning distance being a distance from the laser origin to a detection position.

6. The method of any one of claims 1 to 5, wherein the filtering out non-ground points from the point cloud based on the key points comprises:

obtaining regions in the top view plane by dividing the top view plane in a radial direction based on the key points;
acquiring height information of the respective regions based on the point cloud; and
determining whether points within the respective regions are non-ground points based on the height information.

7. The method of any one of claims 2 to 5, wherein the filtering out non-ground points from the point cloud based on the key points comprises:

acquiring, in the top view plane, a plurality of key points on a straight line connecting the coordinate origin with a key point;
obtaining height information of a region between two adjacent key points on the straight line, based on the point cloud; and
determining whether a point in the region is a non-ground point based on the height information.

8. A device for filtering out non-ground points from a point cloud, comprising:

a point cloud acquisition unit configured to acquire a point cloud by scanning the ground with light detection and ranging, LiDAR;
a radial distance calculation unit configured to calculate radial distances of adjacent points in the point cloud;
a key point determination unit configured to determine key points based on a variation of the radial distances of adjacent points; and
a ground detection unit configured to filter out non-ground points from the point cloud based on the key points.

9. The device of claim 8, wherein the adjacent points comprise points obtained by scanning the ground using adjacent laser heads of the LiDAR or points obtained by scanning the ground using one laser head of the LiDAR at adjacent scanning angles; and the radial distance is a distance from a projection position of a point of the point cloud to a coordinate origin in the top view plane, and the coordinate origin in the top view plane is a projection of a laser origin in the top view plane.

10. The device of claim 8 or 9, wherein the key point determination unit comprises:

a setting subunit configured to set a threshold for the variation of the radial distances; and
a determination subunit configured to determine at least one of the adjacent points as a key point, in a case that the variation of the radial distances of the adjacent points is greater than the threshold.

11. The device of claim 10, wherein the setting subunit is further configured to set the threshold based on an angular resolution of the LiDAR.

12. The device of claim 11, wherein the setting subunit is further configured to set the threshold to be greater than or equal to a product of the angular resolution of the LiDAR and a scanning distance, the scanning distance being a distance from the laser origin to a detection position.

13. The device of any one of claims 8 to 12, wherein the ground detection unit is further configured to:

obtain regions in the top view plane by dividing the top view plane in a radial direction based on the key points;

acquire height information of the respective regions based on the point cloud; and

determine whether points within the respective regions are non-ground points based on the height information.

14. The device of any one of claims 9 to 12, wherein the ground detection unit is further configured to:

acquire, in the top view plane, a plurality of key points on a straight line connecting the coordinate origin with a key point;

obtain height information of a region between two adjacent key points on the straight line based on the point cloud; and

determine whether a point in the region is a non-ground point based on the height information.

15. A device for filtering out non-ground points from a point cloud, comprising:

one or more processors;

a storage device configured to store one or more programs;

wherein the one or more programs, when executed by the one or more processors, cause the one or more processors to implement the method of any one of claims 1 to 7.

16. A non-transitory computer readable storage medium, in which a computer program is stored, wherein the program, when executed by a processor, causes the processor to implement the method of any one of claims 1 to 7.

acquiring a point cloud by scanning ground with LiDAR — S110

calculating radial distances of adjacent points in the point cloud — S120

determining key points based on a variation of the radial distances of adjacent points — S130

filtering out non-ground points from the point cloud based on the key points — S140

**FIG. 1**

**FIG. 2**

**FIG. 3a**

**FIG. 3b**

**FIG. 4**

obtaining regions in the top view plane by dividing the top view plane in a radial direction based on the key points — S210

acquiring height information of the respective regions based on the point cloud — S220

determining whether points within the respective regions are non-ground points based on the height information — S230

**FIG. 5**

acquiring, in the top view plane, a plurality of key points on a straight line connecting the coordinate origin with a key point — S310

obtaining height information of a region between two adjacent key points on the straight line, based on the point cloud — S320

determining whether a point in the region is a non-ground point based on the height information — S330

**FIG. 6**

100       200       300       400

| point cloud acquisition unit | radial distance calculation unit | key point determination unit | ground detection unit |
|---|---|---|---|

**FIG. 7**

key point determination unit      300

310       320

| setting subunit | determination subunit |
|---|---|

**FIG. 8**

| communication interface | 103 | | memory | 101 |
|---|---|---|---|---|

| processor | 102 |
|---|---|

**FIG. 9**

Europäisches
Patentamt

European
Patent Office

Office européen
des brevets

# EUROPEAN SEARCH REPORT

Application Number

EP 19 18 5606

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 108 427 124 A (BEIJING IDRIVER PLUS TECH CO LTD) 21 August 2018 (2018-08-21) * paragraph [0004] - paragraphs [0009], [0024], [0026], [0028], [0035], [0065]; figures 1-3 * | 1-16 | INV. G01S7/48 G06K9/00 G01S17/93 |
| A | US 2017/067738 A1 (KIM JEONG KU [KR]) 9 March 2017 (2017-03-09) * paragraphs [0037], [0050] - paragraph [0056]; figure 2 * | 1-16 | |

TECHNICAL FIELDS
SEARCHED      (IPC)

G01S
G06K

The present search report has been drawn up for all claims

| Place of search | Date of completion of the search | Examiner |
|---|---|---|
| Munich | 17 December 2019 | Beer, Mark |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 18 5606

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2019

| Patent document cited in search report | | Publication date | Patent family member(s) | Publication date |
|---|---|---|---|---|
| CN 108427124 | A | 21-08-2018 | NONE | |
| US 2017067738 | A1 | 09-03-2017 | DE 102016216294 A1 | 09-03-2017 |
| | | | KR 20170028603 A | 14-03-2017 |
| | | | US 2017067738 A1 | 09-03-2017 |

EPO FORM P0459

For more details about this annex : see Official Journal of the European Patent Office, No. 12/82